# EUROPEAN PATENT SPECIFICATION

(11) **EP 2 754 112 B1**
(45) Date of publication and mention of the grant of the patent: **06.09.2017**
(21) Application number: 12773401.0
(22) Date of filing: 06.09.2012
(51) Int. Cl.: G06Q 30/00

(54) **SYSTEM AMD METHOD FOR PRODUCING COMPLEX MULTIMEDIA CONTENTS BY AN AUTHOR AND FOR USING SUCH COMPLEX MULTIMEDIA CONTENTS BY A USER**
SYSTEM UND VERFAHREN ZUR HERSTELLUNG KOMPLEXER MULTIMEDIA-INHALTE DURCH EINEN AUTOR UND ZUR VERWENDUNG SOLCHER KOMPLEXE VON MULTIMEDIAINHALTEN DURCH EINEN BENUTZER
SYSTÈME ET PROCÉDÉ PERMETTANT À UN AUTEUR DE PRODUIRE UN CONTENU MULTIMÉDIA COMPLEXE ET À UN UTILISATEUR D'UTILISER LEDIT CONTENU MULTIMÉDIA COMPLEXE

(30) Priority: 08.09.2011 IT RM20110469
(43) Date of publication of application: 16.07.2014
(73) Proprietor: Hyper TV Inc., New York, NY 10012 (US)
(72) Inventor: VACCARELLA, Claudio, I-00189 Roma (IT); MORINI, Giorgio, I-00189 Roma (IT)
(74) Representative: Carangelo, Pierluigi
(86) International application number: PCT/IT2012/000272
(87) International publication number: WO 2013/035121

(56) References cited:
- US-A1- 2009 259 633

## Description

The present disclosure relates to a system and method for producing complex multimedia contents by an author and for using such contents by a user.

The need to produce complex multimedia content comprising a base content, such as a video for example, and comprising one or more additional contents or events associated, for example semantically, to the base content, is felt. Such additional contents are for example transmitted by means of application programs which enable a user to have a certain possibility of interaction during the use of the base content, for example to enable a user to express a preference or to use additional information semantically correlated to the base content. For the purposes of the present description the combination of base content and of one or more additional contents will be defined as complex content. The use of additional contents by a user simultaneously to use of the base content is definable analogically as a complex multimedia experience.

Currently the possibilities of producing complex multimedia content are rather limited, both in relation to the possibility of establishing the correct timing of the additional contents in relation to the base content during the editing step and in relation to the practical usage mode of the complex multimedia experience by a user.

The patent application US 2009/0259633 A1 describes a system and a method which make it possible, in response to a user request through a client device, to automatically associate a video present in an archive with another video and/or metadata present in another archive. In the system and method described above the creation of the complex content occurs each time following the user request and no active intervention by an author is envisaged. The aforesaid method and the aforesaid system are therefore of limited flexibility both in relation to the variety of contents selectable in the creation of complex content and in relation to the synchronisation requirements during use of the base content of the remaining contents composing the complex content.

International patent application No. WO99/46702 discloses a method of dynamic video annotation among a plurality of users that utilizes a programmable computer and further discloses an apparatus for enabling multiple users to share their views about a video content.

The purpose of the present description is to make available a system and method for the production of complex multimedia contents by an author and for the use of such contents by a user.

Such purpose is achieved by means of a system as defined in general in claim 1 and by means of a method as defined in claim 10. Preferred and advantageous embodiments of the aforesaid system and of the aforesaid method are defined in the appended dependent claims.

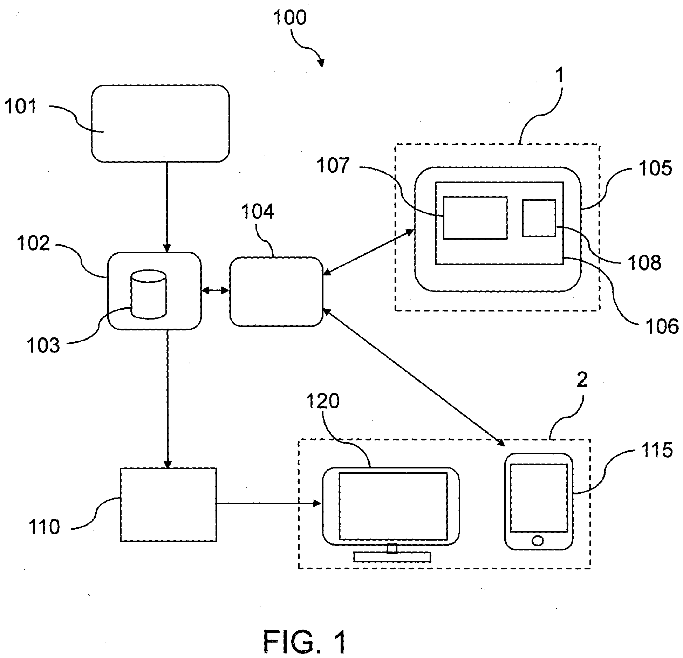

The invention will be more clearly comprehensible from the following detailed description of its particular embodiments made by way of non-limiting examples with reference to the appended figure 1 which shows a general functional block diagram of a system for producing complex multimedia contents by an author and for the use of such contents by a user.

With reference to the appended figure 1 reference numeral 100 globally denotes a system for the production of complex multimedia contents by an author and for the use of such complex multimedia contents by a user. The complex multimedia contents comprise a base content and at least one additional event associated and synchronised with the base content.

The system 100 comprises an editing subsystem 101, comprising a software platform and hardware adapted to support the software platform. The software platform comprises an event editor configured to allow an author to produce a complex multimedia content wherein the additional content is selected by an author, for example in an active manner by selection from a database, and specifically synchronised relative to an actual time evolution of the base content, the additional content being intended, in the use of the base content by the user, to represent an event associated and synchronised with the base content. According to one embodiment such event is semantically and/or logically correlated to the base content.

According to one embodiment, the editing subsystem 101 is configured to store the complex multimedia contents in data structures adapted to store the information relative to the association of the base content with the additional content, including the synchronisation information of the additional content relative to the time evolution of the base content. In other words such information represents timing data used to mark the availability in time, that is, the accessibility to a user, of the additional content relative to the base content.

According to one embodiment, the software platform of the editing subsystem 101 is such that the author can interact with the editing subsystem by means of a browser.

The system 100 further comprises a back-end subsystem 102 comprising a database 103 adapted to store the aforesaid complex multimedia content produced by the author using the editing subsystem 101 to make the additional content available to a user.

Moreover, the system 100 comprises a front-end subsystem 104 comprising a software platform and hardware adapted to support the software platform, the software platform of the front-end subsystem 104 comprising an event engine adapted to interact with the back-end subsystem 102 to allow the user to use the additional content simultaneously with use of said base content. Such use takes place by means of a suitable user terminal or client device 105,115.

With reference to figure 1, as regards the client device 105,115 two alternative or complementary scenarios are possible.

In a first scenario, denoted as no. 1, the client device 105 comprises a user interface 106, such as a graphic interface, for the simultaneous use of the base content and of the additional content and therefore of the entire complex multimedia content. For example, in the case in which the base content is a video or an image and the additional content is a further video or image, the common graphic interface 106 of the front-end subsystem comprises two windows 107 and 108 provided respectively for use of the base content and use of the additional content. The client device 105 includes for example in this case a web browser which can be connected via internet to the front end subsystem 104 and suitable for loading a web page to be viewed on the graphic interface 106 comprising at least one player able to play the base content and the additional content in the respective windows 107, 108 according to the timing envisaged by the author during the editing step and orchestrated at the front-end subsystem 104 by the event engine. It is to be remembered that the additional content may also be transmitted via a web application, such as an interactive application, which uses the window 108 and/or even a sub-portion of the window 107 intended for use the base content.

In a second scenario, denoted as no.2, the user device 115 takes the form of a terminal such as for example a smart phone or tablet, which can be operatively connected to the front-end subsystem 104 and intended for the use of the additional content, the base content being for example transmitted via broadcasting and by means of a broadcasting network 110 to a standard terminal 120, such as a TV terminal. In this case, in the example in which the base content is a video and/or audio content, it is possible to envisage that the editing subsystem 101 associates fingerprints or watermarks with the base content for recognition by the front end subsystem 104 of the base content and the synchronisation of the additional content intended to be used via the client device 115. According to one embodiment, the editing subsystem 101 and the front end subsystem 104 allow both scenarios to be handled, by being specifically configured to produce and make available complex content utilisable according to the above scenarios 1 and 2.

According to one advantageous embodiment, the base content can be played by a player and the software platform of the editing subsystem 101 comprises a graphic interface provided with a player adapted to play such base content. Such software platform of the editing subsystem 101 allows an author to:
- start the playing of said base content by the aforesaid player;
- set said playing to a pause state for determining an instant of time relative whereto the author wishes to synchronise the base content and the additional content with one another to form the complex content;
- select the additional content to be associated to the base content while said playing is in the pause state and associate said selected additional content to said base content thus forming a complex content.

According to one embodiment, the base content is a video suitable for viewing by means of a player, and the front-end subsystem 104 co-operating with the back-end subsystem 102 is such as to provide the client device 105, 115 with a web page with a player for playing said video, said provided player comprising the event engine. It is also possible to envisage that the playing of said additional content on said client device 105, 115 is such as to set the playing of the base content to a pause state. Moreover, it is possible to envisage that the additional content is provided to the user via an application program which requires an input from the user and wherein the web page is configured so that the playing of the base content may only resume after said application program has received said user input.

It may be seen that the system 100 described above, for example web-based, permits the creation of complex "User Experiences" (UX) or complex multimedia experiences, starting from independent multimedia contents such as video, audio files, music, audio or video streaming, simple web pages, images, texts, sounds.

The information is composed according to specific time cadences, also enabling activation of the applications which may allow a user to enjoy a User Experience. The relevant players in the system 100 are:
- the author, that is the person using the system to create a User Experience;
- the user, that is the person enjoying or participating in the UX.

The event engine comes into play in the front-end subsystem 104 and thus also in the client device 105,115 to enable use of the UX by the user to activate, according to the time cadence established during the editing step, the various components which form part of the UX.

In the system 100, the complex contents produced by means of the editing subsystem 101 are stored in the database 103 which forms part of the back-end subsystem 102. This subsystem 102 makes all the complex contents generated by the author persistent and, according to one embodiment, also the interactions received by the users during use of the UX.

The event engine is part of a front-end subsystem 104 and is loaded on the client device 15,115 for example in a browser, and allows the users to use the UX for example via web, even allowing the users to interact with the UX if necessary, both using the browser (scenario 1), and using the multichannel device (scenario 2) which current technology makes available (smart phone, tablet). In the latter case also, the front-end subsystem 104 will comprise a software platform suitable for providing the UX, and in particular the additional content, and for collecting the interactions of the users for their storage if necessary in the back-end subsystem 102.

The editing subsystem 101 is a platform which allows the author, for example, to design the web pages which provide the UX with the relative contents and events. This entire collection of information is the so-called complex content. The platform 101 provides the chance to store the complex content in the data base 103 using suitable data structures.

The events editor of the editing subsystem 101 is used by the author to create a series of timed events to associate to the multimedia content which he wishes to combine for the creation of the complex content. In other words, the multimedia content takes the practical form when used, even of an interactive kind depending on the type of content composing it, of representing a series of timed events. In other words the author can design the temporal execution of the UX.

The type of events available to the UX author in the step of editing by means of the editing subsystem 101 is as follows:
- activation of additional content enriching the initial multimedia content usable in the same player as the starting content or in a secondary player (images, music, sound, explanatory text, other videos);
- activation of web applications enriching the base content external to the base content player (maps, web-frame with text and image contents, slide-show, image gallery);
- activation of web applications interacting with the UX (quiz, polls, message board, chat) on the web page;
- activation of applications interacting with the UX on portable devices (tablets, smart phones) during broadcast or live events (TV, radio, concerts, conventions) or during the playing of multimedia content (DVD, mp3, mp4).

The front-end subsystem 104 makes it possible to supply the UX to a user. As regard the web component, in the case of scenario no. 1, according to one embodiment, such subsystem makes it possible to generate in the client device 105 web pages which are displayed in a browser and which contain within them the event engine. So, in this case the user has all the elements which permit a UX to be played in his browser.

According to one embodiment, when a user wants to use a certain UX, the front-end system 104 loads a complex content from the back-end subsystem 102, generates the pages, such as web pages, and sends them to the client device 105 and thus to the user together with the events engine. The events engine is loaded in the user's browser and once playing of the UX has commenced extracts the events (for example in XML format) from the complex content and dynamically activates the various multimedia components according to the time cadences established by the author during the editing step. In addition, if foreseen in the UX, the events engine also activates the web applications present in the page which allow the user to interact during fruition of the UX.

According to one embodiment, in the case of UX associated with broadcast (television or radio programmes) or live events (such as for example concerts, or conferences) the events engine activates the server component (servlet) of applications running on portable devices, such as a smart phone for example. These applications can be specially developed for the UX (think for example of a famous reality show) and enable the choices /preferences expressed by the user watching the broadcast event to be transmitted. By activating the server component it is possible to transmit information in specific instants of time defined in the event by the author. This information can be collected by the servlet and rendered persistent in the database 103 of the back-end subsystem 102 where it is associated with the complex content. It is to be noted that it is therefore possible to enrich the UX which a user experiences by synchronising it with the interactions of other users. In addition, it is even possible to condition the UX (if envisaged by the author during the editing step) with the result of the interaction, performed both via a browser and via portable communication devices (such as smart phones).

According to one embodiment, the editing subsystem 101 is based on the "hypercontent" concept. Hypercontent is practically speaking a data structure enabling a complex content, that is to say a base content together with all the events (that is additional contents) which are associated by the author to the temporal execution of the base content, to be composed and stored. Each hypercontent contains a complex content.

According to one embodiment, the editing subsystem 101 enables the author to create "containers" which are nothing other than the containers of hypercontent. For example, an author could create a container for a specific themed topic. In this container, which may be thought of as a sort of channel, he stores the hypercontent relative to the same topic. Data structures are therefore provided which permit the storage and organisation of the hypercontent in theme channels. In addition thereto, it is possible to envisage other data structures called "playlists". The author may create one or more playlists. A playlist represents the sequence with which the complex contents may be performed, one after the other. The author therefore has available libraries of complex content (containers) all ready from which he may withdraw a series of hypercontent to organise in a playlist. In this case the playlist will be performed by the front-end sub-system 105, 115 during use by the users.

For example, the author creates a complex content by connecting to the editing subsystem 101. By means of a management interface the author creates an instance of the structures which will contain the hypercontent and assigns them a name and other characteristics. The author can then select from a library of multimedia content the base content which will later become the complex content. Once this has been done, the author may for example activate the association of the events (that is of the additional contents) to the base content by means of another interface. In the case in which the base content is a video file, the event creation interface proposes for example the video in a player. By setting the player to pause at a certain instant in time, the subsystem proposes the creation of an event for that instant. The author may enter all the information characterising the event he is creating, including the timing. It is clear that the information entered depends on the type of event which one wishes to create. For example, if at second 10 of the video, the author wishes a caption to appear superimposed on a certain portion of the video for the next 5 seconds, and this caption to be clickable and once clicked to make information appear in another area of the page, he may enter the following information :
- time of the event;
- dimension and position of the clickable area;
- text and characteristics of the text to be entered in the area;
- duration of the clickable area;
- type of web application associated with the clickable area;
- instance of the web application;
- URL to be visualised by the web application.

As another example it is possible to envisage another event which, at a certain instant, makes a web application of the poll type (additional contact or event) appear externally to the player of the base content and the video (base content) is set to pause while the user responds to the poll. By means of the event creation interface, the author sets the video to pause at the instant in which he wishes to make the poll appear. By means of the management interface the author decides that the event he wishes to create is of the poll type. He enters the name of the poll application (already prepared beforehand). Moreover, by means of the subsystem 101 the author may order the video file to set to pause to give the user time to actively interact /respond.

Like the other type of example, relative to a more complex UX, this may be used by means of a web page in which contents are proposed (multimedia or not) which depend on the interactions which the remote users may have with the smart phone applications 115. In this case the events depend on when the interaction may take place and on the result of the interaction. For example it may be envisaged to develop a smart phone application for a highly successful television show (such as a reality show). This application allows the interaction of a television user with a user experience in certain moments of the broadcast. These moments are defined by the events established by the author in certain absolute instants of time. The connection between the smart phone application and the front-end system 104 is ensured by watermarks inserted in the audio tracks of the broadcast. When the watermark is detected by the application, this connects with the front-end subsystem 104. Consequently, when envisaged by the author, the application of the client device 115 receives from the front-end subsystem 104 all the information needed to allow a user to interact. After the users have interacted, the back-end subsystem 102 processes the interactions and provides the result to the front-end subsystem 104.This may for example occur to produce an event relative to the overall results of the various interactions in the client device 115 and for example in this case the smart phone application 115 receives the result to propose to the users from the front-end subsystem 104.

In all these cases, the events may be information in XML which is stored in the data structures containing the complex content. The video file for example is not altered, but there is additional information which complements it.

According to one example, the time flow may be represented as follows:
1) the author uploads one or more videos (base content);
2) the author uploads one or more images to associate with the video,
3) the author prepares a series of additional content to associate with the video;
4) the author commences the step of defining the correlations between the main video and the associated additional contents;
5) by means of a specific web interface the author activates the video player and scrolls the video until he finds a link point (correlation with other content);
6) at this point the author sets the video to pause and defines what must happen (event) in concomitance with the viewing of that specific frame of the video;
7) once step 6 is completed the author composes the page and associates a graphic style to it.
The resulting video file may be modified according to the two possible cases below.

In a first case (scenario 1), envisaged for web use, the metadata is inserted at the synchronisation points in the video stream. The metadata contain information on the associated additional event. A descriptor file (XML) is, in addition, sent to the user's browser with further information.

In a second case (scenario 2) the metadata is inserted in the feed video of the broadcaster by means of a Hw/Sw apparatus in itself known. The payload of the metadata injected includes the information for triggering sending of the additional contents to be used via the terminal 115.

The events which can be entered in the aforesaid step 6 may be of different types, such as:
a) events for use by a user of an additional content (image/video/audio/etc);
b) events for running an application/widget (such as polls, votes, maps, etc.);
c) events permitting an exchange of information with the people of a social network on web.

In the case of base video content, the front-end subsystem 104 may be configured to allow the client device 105,115 to visualise pages which contain a video player able to read the entire complex content. This player may for example be written in flash language and contain the component which may be called an event engine. This component can be configured for example to read an XML file containing the events to be run so as to translate it into actions, which may be internal to the player itself and/or external to the player. Those which are external may interface with the web applications already present on the page. In the aforesaid XML file each event may be associated with the time when it must be run. This time may be relative to the timing of the video (base content), or may be an absolute time. So, when a browser of a client device 105, 115 connects to the front-end subsystem 104 the browser can load a page including a player, which in turn includes the event engine. In practice, everything can be loaded from the browser during the loading of the page.

According to one embodiment, the system 100 can be configured so that the interaction of the user with the system 100 takes place in the following manner:
1. the user connects to internet via the client device 105, 115 and via the browser goes to the web address of a specific portal;
2. a home page which a video is present in (base content) is visualised by the browser;
3. The user plays the video (the possibility of auto play is also envisaged by means of which the video is started as soon as the page is loaded);
4. The event engine identifies the metadata from the video data received enabling the browser to download an application from the front-end subsystem 104 and to run such application for use of its additional contents semantically connected to the video.

An "augmented experience" is thus obtained in which the page is dynamically modified in relation to the specific frame of the video without the need for the final user to select a hyperlink. It is possible in the extreme for one of the events to be the loading of a new playlist at the end of visualisation of the current video (base content). This way the navigation becomes dynamic even if the user does not perform any interaction.

Lastly it may be observed that the interaction may in any case be guaranteed by the fact that it is possible, during the production step via the subsystem 101, to establish that some events, as well as visualising contents and applications, may also stop the use of the video which is only resumed upon a specific action by the user.

It is to be observed that the above description for the system 100 also corresponds to a description of the method for the production of complex multimedia contents by an author and for the use of such complex multimedia contents by a user, the complex multimedia contents comprising a base content and at least one additional content associated and synchronised with the base content. The method comprises the steps of:
- producing a complex multimedia content by means of an editing subsystem 101, comprising a software platform and hardware adapted to support the software platform, the software platform comprising an event editor configured to allow an author to produce a complex multimedia content wherein the additional content is specifically synchronised relative to an actual time evolution of the base content, the additional content being intended, in the use of the base content by the user, to represent an event associated and synchronised with the base content;
- storing the aforesaid complex multimedia content produced by the editing subsystem into a database (103) of a back-end subsystem (102) to make said additional content available to said user;
- making the additional content available to a user by means of a front-end subsystem 104 for the use thereof by means of a client device 105, 115, the front-end subsystem comprising a software platform and hardware adapted to support the software platform, the software platform of the front-end subsystem 104 comprising an event engine loadable to the client device 105, 115 to allow said user to use the additional content simultaneously to the use of said base content.

The particular features of the aforesaid method may be deduced from the description already given of the system 100.

From the description just made it is possible to comprehend how a system and method of the type described above fully satisfy the pre-established objectives.

Obviously, a person skilled in the art may make numerous modifications and variations to the system and method described above so as to satisfy contingent and specific requirements, while remaining within the sphere of protection of the invention, as defined by the following claims.

## Claims

1. System (100) for producing complex multimedia contents by an author and for use of such complex multimedia contents by a user, the complex multimedia contents comprising a base content and at least one additional content associated and synchronised relative to the base content, the system (100) comprising:
- an editing subsystem (101), comprising a software platform and hardware adapted to support the software platform, the software platform comprising an event editor configured to allow an author to select from a database said at least one additional content and synchronise it in relation to the base content to design a temporal execution of a user experience and produce a complex multimedia content wherein said at least one additional content is specifically synchronised relative to an actual time evolution of the base content, the additional content being intended, in the use of the base content by the user, to represent an event associated with and synchronised with the base content; and
- a back-end subsystem (102) comprising a database (103) adapted to store the aforesaid complex multimedia content produced by the editing subsystem to make said additional content available to said user; and
- a front-end subsystem (104), comprising a software platform and hardware adapted to support the software platform, the software platform of the front-end subsystem (104) comprising an event engine adapted to interact with the back-end subsystem (102) to allow the user to use the additional content simultaneously with use of said base content, the event engine being loadable by said front-end subsystem into a client device (105,115) of the user to enable said user to use via web the additional content simultaneously to said base content by means of said client device (105,115);
wherein:
- the editing subsystem (101) is configured to store the complex multimedia contents to data structures adapted to store the information relative to the association of the base content with the additional content, including the synchronisation information of the additional content relative to the time evolution of the base content;
- the front-end system (104) is configured for loading a complex content from the back-end subsystem (102) generating web pages and sending them to the client device (105) together with the event engine;
- the event engine is configured for being loaded in a user's browser and, once playing of the user experience has commenced, for extracting events from the complex content and dynamically activating various multimedia components according to time cadences established by the author with the editing sub-system;
- the event engine is adapted to activate web applications in the client device (105, 115) allowing user interaction.

2. System (100) according to claim 1, wherein the base content is suitable for being played through a player and wherein the software platform of the editing subsystem (101) comprises a graphic interface provided with a player suitable for playing such base content, wherein the software platform of the editing subsystem (101) allows the author to:
- start the playing of said base content by means of said player;
- set said playing to a pause state for determining an instant of time relative whereto the author wishes to synchronise the base content and the additional content with one another to form the complex content;
- select the additional content to be associated to the base content while said playing is in the pause state and associate said selected additional content to said base content thus forming a complex content.

3. System (100) according to any one of the previous claims, wherein said base content is a video adapted to be displayed by means of a player, and wherein the front-end subsystem (104) is such as to provide said client device (105, 115) with a web page with a player for playing said video, said player provided to the client device (105, 115) comprising said event engine.

4. System (100) according to claim 3, wherein the playing of said additional content on said client device (105, 115) is such as to set the playing of the base content to a pause state.

5. System (100) according to claim 4, wherein the additional content is provided by means of an application program which requires an input from the user and wherein the web page is configured so that the playing of the base content may only resume after said application programme has received said input.

6. System according to any one of the previous claims, wherein the editing subsystem (101) and said front-end subsystem (104) are configured so as to allow the use of said additional content:
- by means of said client device (105) which is adapted to interface itself with said front-end subsystem (104) also for the simultaneous use of said base content; and
- by means of a further client device (115) adapted to interface itself with said front-end subsystem (104) for the exclusive use of the additional content, said front-end system (104) allowing said further client device (115) to synchronise with said base content, said base content being transmitted by means of a different channel and including watermarks/fingerprints for the aforesaid synchronisation, said watermarks/fingerprints being receivable by said front-end subsystem (104) by means of said further client device (115).

7. System according to claim 3, wherein said additional content is provided by means of a web application loaded by means of said web page.

8. System (100) according to any one of the previous claims, wherein said software platform of the editing subsystem (101) is such that said author can interact with the editing subsystem (101) by means of a browser.

9. Method for producing complex multimedia contents by an author and for use of such complex multimedia contents by a user, the complex multimedia contents comprising a base content and at least one additional content associated and synchronised with the base content, the method comprising the steps of:
- producing a complex multimedia content by means of an editing subsystem (101), comprising a software platform and hardware adapted to support the software platform, the software platform comprising an event editor configured to allow the author to select from a database the additional content and synchronise it in relation to the base content to design a temporal execution of a user experience and produce a complex multimedia content wherein the additional content is specifically synchronised relative to an actual time evolution of the base content, the additional content being intended, in the use of the base content by the user, to represent an event associated with and synchronised with the base content;
- storing the aforesaid complex multimedia content produced by means of the editing subsystem to a database (103) of a back-end subsystem (102) to make said additional content available to said user;
- making the additional content available to the user by means of a front-end subsystem (104) for the use thereof by means of a client device (105, 115), the front-end subsystem (104) comprising a software platform and hardware adapted to support the software platform, the software platform of the front-end subsystem (104) comprising an event engine adapted to interact with the back-end subsystem (102) to allow the user to use the additional content simultaneously with use of said base content, the event engine being loadable by said front-end subsystem into said client device (105, 115) to allow said user to use via web the additional content simultaneously with the use of said base content by means of said client device (105,115);
wherein:
- the storing step is such to store the complex multimedia contents to data structures adapted to store the information relative to the association of the base content with the additional content, including the synchronisation information of the additional content relative to the time evolution of the base content;
- the front-end system (104) loads a complex content from the back-end subsystem (102) generates web pages and sends them to the client device (105) together with the event engine;
- the event engine is loaded in a user's browser and once playing of the user experience has commenced extracts events from the complex content and dynamically activates various multimedia components according to time cadences established by the author with the editing sub-system;
- the event engine is adapted to activate web applications in the client device (105, 115) allowing user interaction.

10. Computer program product comprising code portions loadable in the memory of one or more computers and suitable for executing a method according to claim 9.

## Patentansprüche

1. System (100) zur Erzeugung komplexer Multimedia-Inhalte durch einen Autor und zur Verwendung solcher komplexer Multimedia-Inhalte durch einen Benutzer, wobei die komplexen Multimedia-Inhalte einen Basisinhalt und wenigstens einen zusätzlichen Inhalt, der mit dem Basisinhalt verknüpft und in Relation zu dem Basisinhalt synchronisiert wird, umfassen, wobei das System (100) umfasst:
- ein Bearbeitungs-Teilsystem (101), das eine Softwareplattform und Hardware, die dazu ausgelegt ist, die Softwareplattform zu unterstützen, umfasst, wobei die Softwareplattform eine Ereignis-Bearbeitungseinrichtung umfasst, welche es einem Autor ermöglicht, den genannten wenigstens einen zusätzlichen Inhalt aus einer Datenbank auszuwählen und in Relation zu dem Basisinhalt zu synchronisieren, um eine zeitliche Ausführung einer Benutzererfahrung zu gestalten und einen komplexen Multimedia-Inhalt zu erzeugen, wobei der benannte wenigstens eine zusätzliche Inhalt speziell in Relation zu einem tatsächlichen Zeitverlauf des Basisinhalts synchronisiert wird, wobei der zusätzliche Inhalt bei der Verwendung des Basisinhalts durch den Benutzer dazu bestimmt ist, ein Ereignis, das mit dem Basisinhalt verknüpft ist und mit diesem synchronisiert wird, darzustellen;
- ein Back-End-Teilsystem (102), das eine Datenbank (103) umfasst, welche dazu ausgelegt ist, den oben genannten, von dem Bearbeitungs-Teilsystem erzeugten komplexen Multimedia-Inhalt zu speichern, um dem Benutzer den zusätzlichen Inhalt zur Verfügung zu stellen; und
- ein Front-End-Teilsystem (104), das eine Softwareplattform und Hardware, die dazu ausgelegt ist, die Softwareplattform zu unterstützen, umfasst, wobei die Softwareplattform des Front-End-Teilsystems (104) eine sog. Ereignis-Maschine umfasst, welche dazu ausgelegt ist, mit dem Back-End-Teilsystem (102) zusammen zu wirken, um es dem Benutzer zu ermöglichen, den zusätzlichen Inhalt gleichzeitig mit dem Basisinhalt zu verwenden, wobei die Ereignis-Maschine von dem Front-End-Teilsystem auf ein Kundengerät (105, 115) des Benutzers geladen werden kann, um es dem Benutzer zu ermöglichen, den zusätzlichen Inhalt gleichzeitig mit dem Basisinhalt mittels des Kundengeräts (105, 115) über das Internet zu verwenden;
wobei:
- das Bearbeitungs-Teilsystem (101) dazu konfiguriert ist, die komplexen Multimedia-Inhalte in Datenstrukturen zu speichern, die dazu ausgelegt sind, die Informationen in Relation zu der Verknüpfung des Basisinhalts mit dem zusätzlichen Inhalt zu speichern, einschließlich der Synchronisierungsinformationen des zusätzlichen Inhalts in Relation zu dem Zeitverlauf des Basisinhalts;
- das Front-End-Teilsystem (104) dazu konfiguriert ist, einen komplexen Inhalt aus dem Back-End-Teilsystem (102) zu laden, Internetseiten zu erzeugen und diese gemeinsam mit der Ereignis-Maschine an das Kundengerät (105) zu senden;
- die Ereignis-Maschine dazu konfiguriert ist, in den Browser eines Benutzers geladen zu werden, und, wenn das Abspielen der Benutzererfahrung begonnen hat, dazu, Ereignisse aus dem komplexen Inhalt zu extrahieren und verschiedene Multimedia-Komponenten gemäß von dem Autor mit Hilfe des Bearbeitungs-Teilsystems festgelegten Zeitrhythmen dynamisch zu aktivieren;
- die Ereignis-Maschine dazu ausgelegt ist, Internetanwendungen in dem Kundengerät (105, 115) zu aktivieren, welche eine Benutzerinteraktion ermöglichen.

2. System (100) gemäß Anspruch 1, wobei der Basisinhalt dazu geeignet ist, über eine Abspieleinrichtung abgespielt zu werden und wobei die Softwareplattform des Bearbeitungs-Teilsystems (101) eine Grafik-Schnittstelle umfasst, die mit einer Abspieleinrichtung, die zum Abspielen eines solchen Basisinhalts geeignet ist, ausgestattet ist, wobei die Softwareplattform des Bearbeitungs-Teilsystems (101) dem Autor ermöglicht:
- das Abspielen des Basisinhalts über die Abspieleinrichtung zu starten;
- das Abspielen zu pausieren, um einen Zeitpunkt zu bestimmen, in Relation zu dem der Autor den Basisinhalt und den zusätzlichen Inhalt miteinander synchronisieren möchte, um den komplexen Inhalt zu bilden;
- den zusätzlichen Inhalt, der mit dem Basisinhalt verknüpft werden soll, auszuwählen, während das Abspielen pausiert wird, und den ausgewählten zusätzlichen Inhalt mit dem Basisinhalt zu verknüpfen, wodurch der komplexe Inhalt gebildet wird.

3. System (100) gemäß einem der vorangegangenen Ansprüche, wobei es sich bei dem Basisinhalt um ein Video handelt, das dazu ausgelegt ist, über eine Abspieleinrichtung abgespielt zu werden, und wobei das Front-End-Teilsystem (104) derart ausgelegt ist, dass es dem Kundengerät (105, 115) eine Internetseite mit einer Abspieleinrichtung zum Abspielen des Videos zur Verfügung stellt, wobei die Abspieleinrichtung, die dem Kundengerät (105, 115) zur Verfügung gestellt wird, die Ereignis-Maschine umfasst.

4. System (100) gemäß Anspruch 3, wobei das Abspielen des zusätzlichen Inhalts auf dem Kundengerät (105, 115) derart ausgelegt ist, dass es das Abspielen des Basisinhalts pausiert.

5. System (100) gemäß Anspruch 4, wobei der zusätzliche Inhalt zur Verfügung gestellt wird über ein Anwendungsprogramm, das eine Eingabe durch einen Benutzer erfordert, und wobei die Internetseite derart konfiguriert ist, dass das Abspielen des Basisinhalts nur fortgesetzt werden kann, nachdem das Anwendungsprogramm diese Eingabe empfangen hat.

6. System gemäß einem der vorangegangenen Ansprüche, wobei das Bearbeitungs-Teilsystem (101) und das Front-End-Teilsystem (104) derart konfiguriert sind, dass sie die Verwendung des zusätzlichen Inhalts ermöglichen:
- über das Kundengerät (105), welches dazu ausgelegt ist, sich selbst über eine Schnittstelle mit dem Front-End-Teilsystem (104) zu verbinden, ebenfalls für die gleichzeitige Verwendung des Basisinhalts; und
- über ein weiteres Kundengerät (115), welches dazu ausgelegt ist, sich selbst über eine Schnittstelle mit dem Front-End-Teilsystem (104) zu verbinden, für die ausschließliche Verwendung des zusätzlichen Inhalts, wobei das Front-End-Teilsystem (104) es dem weiteren Kundengerät (115) erlaubt, sich mit dem Basisinhalt zu synchronisieren, wobei der Basisinhalt über einen unterschiedlichen Kanal übertragen wird und Wasserzeichen/Fingerabdrücke für die Synchronisierung beinhaltet, wobei die Wasserzeichen/Fingerabdrücke von dem Front-End-Teilsystem (104) über das weitere Kundengerät (115) empfangen werden können.

7. System gemäß Anspruch 3, wobei der zusätzliche Inhalt über eine Internetanwendung, die über die Internetseite geladen wird, zur Verfügung gestellt wird.

8. System (100) gemäß einem der vorangegangenen Ansprüche, wobei die Softwareplattform des Bearbeitungs-Teilsystems (101) derart ausgelegt ist, dass der Autor mit dem Bearbeitungs-Teilsystem (101) über einen Browser interagieren kann.

9. Verfahren zur Erzeugung komplexer Multimedia-Inhalte durch einen Autor und zur Verwendung solcher komplexer Multimedia-Inhalte durch einen Benutzer, wobei die komplexen Multimedia-Inhalte einen Basisinhalt und wenigstens einen zusätzlichen Inhalt, der mit dem Basisinhalt verknüpft und mit dem Basisinhalt synchronisiert wird, umfassen, wobei das Verfahren die folgenden Schritte umfasst:
- Erzeugen eines komplexen Multimedia-Inhaltes über ein Bearbeitungs-Teilsystem (101), das eine Softwareplattform und Hardware, die dazu ausgelegt ist, die Softwareplattform zu unterstützen, umfasst, wobei die Softwareplattform eine Ereignis-Bearbeitungseinrichtung umfasst, welche es dem Autor ermöglicht, den zusätzlichen Inhalt aus einer Datenbank auszuwählen und in Relation zu dem Basisinhalt zu synchronisieren, um eine zeitliche Ausführung einer Benutzererfahrung zu gestalten und einen komplexen Multimedia-Inhalt zu erzeugen, wobei der zusätzliche Inhalt speziell in Relation zu einem tatsächlichen Zeitverlauf des Basisinhalts synchronisiert wird, wobei der zusätzliche Inhalt bei der Verwendung des Basisinhalts durch den Benutzer dazu bestimmt ist, ein Ereignis, das mit dem Basisinhalt verknüpft ist und mit diesem synchronisiert wird, darzustellen;
- Speichern des von dem Bearbeitungs-Teilsystem erzeugten komplexen Multimedia-Inhalts in einer Datenbank (103) eines Back-End-Teilsystems (102), um dem Benutzer den zusätzlichen Inhalt zur Verfügung zu stellen;
- zur Verfügung Stellen des zusätzlichen Inhalts an den Benutzer über ein Front-End-Teilsystem (104) für eine Verwendung desselben über ein Kundengerät (105, 115), wobei das Front-End-Teilsystem (104) eine Softwareplattform und Hardware, die dazu ausgelegt ist, die Softwareplattform zu unterstützen, umfasst, wobei die Softwareplattform des Front-End-Teilsystems (104) eine sog. Ereignis-Maschine umfasst, welche dazu ausgelegt ist, mit dem Back-End-Teilsystem (102) zusammen zu wirken, um es dem Benutzer zu ermöglichen, den zusätzlichen Inhalt gleichzeitig mit dem Basisinhalt zu verwenden, wobei die Ereignis-Maschine von dem Front-End-Teilsystem auf das Kundengerät (105, 115) geladen werden kann, um es dem Benutzer zu ermöglichen, den zusätzlichen Inhalt gleichzeitig mit dem Basisinhalt mittels des Kundengeräts (105, 115) über das Internet zu verwenden;
wobei:
- der Schritt des Speicherns derart verläuft, dass die komplexen Multimedia-Inhalte in Datenstrukturen gespeichert werden, die dazu ausgelegt sind, die Informationen in Relation zu der Verknüpfung des Basisinhalts mit dem zusätzlichen Inhalt zu speichern, einschließlich der Synchronisierungsinformationen des zusätzlichen Inhalts in Relation zu dem Zeitverlauf des Basisinhalts;
- das Front-End-Teilsystem (104) einen komplexen Inhalt aus dem Back-End-Teilsystem (102) lädt, Internetseiten erzeugt und diese gemeinsam mit der Ereignis-Maschine an das Kundengerät (105) sendet;
- die Ereignis-Maschine in den Browser eines Benutzers geladen wird, und, wenn das Abspielen der Benutzererfahrung begonnen hat, Ereignisse aus dem komplexen Inhalt extrahiert und verschiedene Multimedia-Komponenten gemäß von dem Autor mit Hilfe des Bearbeitungs-Teilsystems festgelegten Zeitrhythmen dynamisch aktiviert;
- die Ereignis-Maschine dazu ausgelegt ist, Internetanwendungen in dem Kundengerät (105, 115) zu aktivieren, welche eine Benutzerinteraktion ermöglichen.

10. Computerprogrammprodukt, das Codeabschnitte umfasst, welche in den Speicher eines oder mehrerer Computer geladen werden können und dazu geeignet sind, das Verfahren gemäß Anspruch 9 auszuführen.

## Revendications

1. Système (100) de production d'un contenu multimédia complexe par un auteur et d'utilisation d'un tel contenu multimédia complexe par un utilisateur, le contenu multimédia complexe comprenant un contenu de base et au moins un contenu supplémentaire associé et synchronisé par rapport au contenu de base, le système (100) comprenant :
- un sous-système d'édition (101), comprenant une plate-forme logicielle et un matériel conçu pour supporter la plate-forme logicielle, la plate-forme logicielle comprenant un éditeur d'événement configuré pour permettre à un auteur de sélectionner dans une base de données ledit au moins un contenu supplémentaire et de le synchroniser par rapport au contenu de base afin de concevoir une exécution temporelle d'une expérience utilisateur et produire un contenu multimédia complexe dans lequel ledit au moins un contenu supplémentaire est spécifiquement synchronisé par rapport à une évolution temporelle réelle du contenu de base, le contenu supplémentaire étant destiné, lors de l'utilisation du contenu de base par l'utilisateur, à représenter un événement associé au et synchronisé avec le contenu de base ; et
- un sous-système dorsal (102) comprenant une base de données (103) conçue pour stocker le contenu multimédia complexe susmentionné produit par le sous-système d'édition pour rendre ledit contenu supplémentaire disponible audit utilisateur ; et
- un sous-système frontal (104), comprenant une plate-forme logicielle et un matériel conçu pour supporter la plate-forme logicielle, la plate-forme logicielle du sous-système frontal (104) comprenant un moteur d'événement conçu pour interagir avec le sous-système dorsal (102) afin de permettre à l'utilisateur d'utiliser le contenu supplémentaire simultanément avec l'utilisation dudit contenu de base, le moteur d'événement pouvant être chargé par ledit sous-système frontal dans un dispositif client (105, 115) de l'utilisateur afin de permettre audit utilisateur d'utiliser par l'intermédiaire du web le contenu supplémentaire simultanément avec ledit contenu de base au moyen dudit dispositif client (105, 115) ;
dans lequel :
- le sous-système d'édition (101) est configuré pour stocker les contenus multimédias complexes dans des structures de données conçues pour stocker les informations relatives à l'association du contenu de base avec le contenu supplémentaire, y compris les informations de synchronisation du contenu supplémentaire relatives à l'évolution temporelle du contenu de base ;
- le système frontal (104) est configuré pour charger un contenu complexe à partir du sous-système dorsal (102), générer des pages web et les envoyer au dispositif client (105) conjointement avec le moteur d'événement ;
- le moteur d'événement est configuré pour être chargé dans un navigateur de l'utilisateur et, dès que la lecture de l'expérience utilisateur a commencé, pour extraire des événements à partir du contenu complexe et activer de manière dynamique divers composants multimédia en fonction des cadences temporelles établies par l'auteur avec le sous-système d'édition ;
- le moteur d'événement est conçu pour activer des applications web dans le dispositif client (105, 115) permettant une interaction avec l'utilisateur.

2. Système (100) selon la revendication 1, dans lequel le contenu de base est approprié pour être lu par un lecteur et dans lequel la plate-forme logicielle du sous-système d'édition (101) comprend une interface graphique pourvue d'un lecteur approprié pour lire un tel contenu de base, dans lequel la plate-forme logicielle du sous-système d'édition (101) permet à l'auteur :
- de commencer la lecture dudit contenu de base au moyen dudit lecteur ;
- d'établir ladite lecture dans un état de pause pour déterminer un instant de temps par rapport auquel l'auteur souhaite synchroniser le contenu de base et le contenu supplémentaire l'un avec l'autre pour former le contenu complexe ;
- de sélectionner le contenu supplémentaire à associer au contenu de base tandis que ladite lecture est dans l'état de pause et d'associer ledit contenu supplémentaire sélectionné audit contenu de base pour ainsi former un contenu complexe.

3. Système (100) selon l'une quelconque des revendications précédentes, dans lequel ledit contenu de base est une vidéo conçue pour être visualisée au moyen d'un lecteur, et dans lequel le sous-système frontal (104) est tel qu'il fournit audit dispositif client (105, 115) une page web avec un lecteur pour lire ladite vidéo, ledit lecteur fourni au dispositif client (105, 115) comprenant ledit moteur d'événement.

4. Système (100) selon la revendication 3, dans lequel la lecture dudit contenu supplémentaire sur ledit dispositif client (105, 115) est telle qu'elle établit la lecture du contenu de base dans un état de pause.

5. Système (100) selon la revendication 4, dans lequel le contenu supplémentaire est fourni au moyen d'un programme d'application qui requiert une entrée de l'utilisateur et dans lequel la page web est configurée de façon que la lecture du contenu de base puisse seulement reprendre après la réception de ladite entrée par ledit programme d'application.

6. Système selon l'une quelconque des revendications précédentes, dans lequel le sous-système d'édition (101) et ledit sous-système frontal (104) sont configurés afin de permettre l'utilisation dudit contenu supplémentaire :
- au moyen dudit dispositif client (105) qui est conçu pour s'interfacer lui-même avec ledit sous-système frontal (104) également pour l'utilisation simultanée dudit contenu de base ; et
- au moyen d'un dispositif client supplémentaire (115) conçu pour s'interfacer lui-même avec ledit sous-système frontal (104) pour l'utilisation exclusive du contenu supplémentaire, ledit sous-système frontal (104) permettant audit dispositif client supplémentaire (115) de se synchroniser avec ledit contenu de base, ledit contenu de base étant transmis au moyen d'un canal différent et comprenant des filigranes numériques/empreintes digitales pour la synchronisation susmentionnée, lesdit(e)s filigranes numériques/empreintes digitales pouvant être reçu(e)s par ledit sous-système frontal (104) au moyen dudit dispositif client supplémentaire (115).

7. Système selon la revendication 3, dans lequel ledit contenu supplémentaire est fourni au moyen d'une application web chargée au moyen de ladite page web.

8. Système (100) selon l'une quelconque des revendications précédentes, dans lequel ladite plate-forme logicielle du sous-système d'édition (101) est telle que ledit auteur peut interagir avec le sous-système d'édition (101) au moyen d'un navigateur.

9. Procédé de production d'un contenu multimédia complexe par un auteur et d'utilisation d'un tel contenu multimédia complexe par un utilisateur, le contenu multimédia complexe comprenant un contenu de base et au moins un contenu supplémentaire associé au et synchronisé avec le contenu de base, le procédé comprenant les étapes suivantes :
- la production d'un contenu multimédia complexe au moyen d'un sous-système d'édition (101), comprenant une plate-forme logicielle et un matériel conçu pour supporter la plate-forme logicielle, la plate-forme logicielle comprenant un éditeur d'événement configuré pour permettre à l'auteur de sélectionner dans une base de données le contenu supplémentaire et de le synchroniser par rapport au contenu de base pour concevoir une exécution temporelle d'une expérience utilisateur et produire un contenu multimédia complexe dans lequel le contenu supplémentaire est spécifiquement synchronisé par rapport à une évolution temporelle réelle du contenu de base, le contenu supplémentaire étant destiné, lors de l'utilisation du contenu de base par l'utilisateur, à représenter un événement associé au et synchronisé avec le contenu de base ;
- le stockage du contenu multimédia complexe susmentionné produit au moyen du sous-système d'édition dans une base de données (103) d'un sous-système dorsal (102) pour rendre ledit contenu supplémentaire disponible audit utilisateur ;
- le fait de rendre le contenu supplémentaire disponible à l'utilisateur au moyen d'un sous-système frontal (104) pour son utilisation au moyen d'un dispositif client (105, 115), le sous-système frontal (104) comprenant une plate-forme logicielle et un matériel conçu pour supporter la plate-forme logicielle, la plate-forme logicielle du sous-système frontal (104) comprenant un moteur d'événement conçu pour interagir avec le sous-système dorsal (102) afin de permettre à l'utilisateur d'utiliser le contenu supplémentaire simultanément avec l'utilisation dudit contenu de base, le moteur d'événement pouvant être chargé par ledit sous-système frontal dans ledit dispositif client (105, 115) afin de permettre audit utilisateur d'utiliser par l'intermédiaire du web le contenu supplémentaire simultanément avec l'utilisation dudit contenu de base au moyen dudit dispositif client (105, 115) ;
dans lequel :
- l'étape de stockage est telle qu'elle stocke le contenu multimédia complexe dans des structures de données conçues pour stocker les informations relatives à l'association du contenu de base avec le contenu supplémentaire, y compris les informations de synchronisation du contenu supplémentaire relatives à l'évolution temporelle du contenu de base ;
- le système frontal (104) charge un contenu complexe à partir du sous-système dorsal (102), génère des pages web et les envoie au dispositif client (105) conjointement avec le moteur d'événement ;
- le moteur d'événement est chargé dans un navigateur de l'utilisateur et, dès que la lecture de l'expérience utilisateur a commencé, extrait des événements à partir du contenu complexe et active de manière dynamique divers composants multimédias en fonction des cadences temporelles établies par l'auteur avec le sous-système d'édition ;
- le moteur d'événement est conçu pour activer des applications web dans le dispositif client (105, 115) permettant une interaction avec l'utilisateur.

10. Produit de programme informatique comprenant des parties de code pouvant être chargées dans la mémoire d'un ou de plusieurs ordinateurs et appropriées pour exécuter un procédé selon la revendication 9.
